# EUROPÄISCHE PATENTSCHRIFT

(11) **EP 4 388 201 B1**
(45) Veröffentlichungstag und Bekanntmachung des Hinweises auf die Patenterteilung: **18.11.2026**
(21) Anmeldenummer: 22765091.8
(22) Anmeldetag: 15.08.2022
(51) Int. Cl.: F04D 13/06, F04D 15/00, F04D 15/02, H02P 21/22, H02P 29/50

(54) **VERFAHREN ZUR FEHLERERKENNUNG, INSBESONDERE EINER LAUFRADVERSTOPFUNG, IN EINER KREISELPUMPE, SOWIE KREISELPUMPE**
METHOD FOR DETECTING A FAULT, IN PARTICULAR AN IMPELLER BLOCKAGE, IN A CENTRIFUGAL PUMP, AND CENTRIFUGAL PUMP
PROCÉDÉ DE DÉTECTION D'ANOMALIES, EN PARTICULIER D'UNE OBSTRUCTION DE ROTOR, DANS UNE POMPE CENTRIFUGE, ET POMPE CENTRIFUGE

(30) Priorität: 20.08.2021 DE 102021121672
(43) Veröffentlichungstag der Anmeldung: 26.06.2024
(73) Patentinhaber: KSB SE & Co. KGaA, 67227 Frankenthal (DE)
(72) Erfinder: BECKER, Vincent, 67685 Erzenhausen (DE); ECKL, Martin, 67227 Frankenthal (DE); MÜLLER, Benedikt, 67227 Frankenthal (DE); URSCHEL, Sven, 67657 Kaiserslautern (DE); SCHAAB, Jochen, 67227 Frankenthal (DE)
(86) Internationale Anmeldenummer: PCT/EP2022/072770
(87) Internationale Veröffentlichungsnummer: WO 2023/020998

(56) Entgegenhaltungen:
- EP-A1- 1 298 511
- WO-A1-2016/153502
- DE-A1- 102017 127 799
- US-A1- 2011 241 888
- BECKER VINCENT ET AL: "Fault Detection of Circulation Pumps on the Basis of Motor Current Evaluation", IEEE TRANSACTIONS ON INDUSTRY APPLICATIONS. IEEE SERVICE CENTER, PISCATAWAY, NJ., US, vol. 57, no. 5, 2 June 2021 (2021-06-02), pages 4617 - 4624, XP011874210, ISSN: 0093-9994, [retrieved on 20210825], DOI: 10.1109/TIA.2021.3085697

## Beschreibung

Die Erfindung betrifft ein Verfahren zur Fehlererkennung, insbesondere zur Erkennung einer Laufradverstopfung, in einer Kreiselpumpe mit einem Dreiphasen-Antriebsmotor mittels Auswertung wenigstens einer Oberschwingung des Motorstroms.

Zirkulationspumpen werden in Trinkwasser, Kühl- und Heizungssystemen eingesetzt. In den letzten Jahrzehnten gab es große Anstrengungen, die Effizienz von Umwälzpumpen zu steigern. Dabei konzentrierte sich die Entwicklung im Wesentlichen auf Verbesserungen des Motor- und Laufraddesigns sowie der Regelalgorithmen. Implementierungen von Zustandsüberwachungsmethoden in Umwälzpumpen sind bisher Mangelware. In Untersuchungen wurde bereits jedoch aufgezeigt, dass etwaige Materialbeeinträchtigungen oder Schäden der Pumpe nicht zwingend zu einem Pumpenausfall führen, sondern zunächst nur einen Betrieb mit reduziertem Wirkungsgrad des Motors oder der Pumpe bedingen können. Es gilt daher, solche Wirkungsgradverschlechterungen möglichst frühzeitig durch eine Fehlererkennungsmethode feststellen zu können.

Um zusätzliche Kosten bei der Pumpenfertigung zu vermeiden, sollte die angewandte Fehlererkennungsmethode möglichst auf der bereits bestehenden Hardware der Pumpe ausführbar sein. Umwälzpumpen nach dem Stand der Technik sind als integrierte Produkte mit eingebauter Mikroprozessoreinheit zur Ausführung eines Regelungsalgorithmus, drehzahlvariablem Antrieb (Frequenzumrichter) sowie Permanentmagnet-Synchronmotoren (PSM) und Laufrad ausgeführt. Gesonderte Stromsensoren erfassen Stromwerte als Eingangsgrößen für die sensorlose Regelung des Motors. In dieser Hardwarekonfiguration mit Stromsensoren und einer Mikroprozessoreinheit bieten Umwälzpumpen eine Plattform für die Implementierung von strombasierten Fehlererkennungsmethoden.

Für die strombasierte Fehlererkennung von Motoren werden im Stand der Technik verschiedene Methoden vorgeschlagen. Die meist verbreitete Methode dürfte die Motorstromsignaturanalyse (MCSA) sein, die mittels Spektralanalyse einer Phase des Motorstroms im eingeschwungenen Zustand eine Fehlerdetektion vornimmt. Für die Auswertung des Spektrums eines Stromsignals ist eine vorausgehende Transformation in den Frequenzbereich erforderlich, was per diskreter Fourier-Transformation (DFT) möglich ist. Die Implementierung der DFT erfordert jedoch hohen Rechenaufwand und eine große Speicherkapazität. Aus diesem Grund wird in der Praxis oftmals auf die Fast-Fourier-Transformation (FFT) zurückgegriffen. Allerdings ist auch die Implementierung der FFT auf einer Mikroprozessoreinheit mit gewissen Hürden verbunden. Als Nachteile der FFT sind die hohe erforderliche Frequenzauflösung, der Leckeffekt und der angenommene stationäre Betrieb während des Beobachtungszeitraums zu nennen.

In der Druckschrift XP011874210 "Fault Detection of Circulation Pumps on the Basis of Motor Current Evaluation", Becker et al., IEEE Transactions on Industry Applications, Vol. 57, No. 5, 2021, S. 4617-4624" wird ein Verfahren zur Fehlererkennung in einer von einem elektrischen Motor, insbesondere einem dreiphasigen permanenterregten Synchronmotor, angetriebenen Kreiselpumpe beschrieben, bei dem zur Zustandsüberwachung eine Motorstromsignaturanalyse (MCSA) durchgeführt wird. Dabei werden charakteristische Frequenzanteile im Motorstromspektrum, insbesondere Seitenbänder um die Netzfrequenz, ausgewertet, um unterschiedliche Fehlerzustände der Pumpe, einschließlich mechanischer Fehler und insbesondere Laufradverstopfungen, zu detektieren, wobei hierzu frequenzspezifische Komponenten des Motorstroms analysiert und deren Amplituden miteinander verglichen werden.

Die Aufgabe der vorliegenden Erfindung besteht darin, ein optimiertes Verfahren für die strombasierte Fehlererkennung aufzuzeigen, das sich problemlos auf einer Mikroprozessoreinheit einer Pumpe implementieren lässt. Insbesondere soll mittels des gesuchten Verfahrens der Speicheraufwand und die Anzahl der auszuführenden Operationen minimiert werden.

Gelöst wird diese Aufgabe durch ein Verfahren gemäß den Merkmalen des Anspruchs 1. Vorteilhafte Ausführungen des Verfahrens sind Gegenstand der abhängigen Ansprüche. Darüber hinaus wird das Verfahren durch eine Pumpe, insbesondere Kreiselpumpe, mit einer Mikroprozessoreinheit zur Ausführung des Verfahrens gelöst.

Das erfindungsgemäße Verfahren wird bevorzugt auf der integralen Mikroprozessoreinheit der Pumpe ausgeführt, insbesondere zur regulären Laufzeit der Pumpe. Die Ausführung auf einer externen Recheneinheit ist jedoch genauso vorstellbar und soll von der Erfindung mitumfasst sein. Die nachfolgenden Erläuterungen beziehen sich vornehmlich auf eine Ausführung und Implementierung des Verfahrens auf der integralen Mikroprozessoreinheit einer Pumpe, insbesondere Kreiselpumpe.

Gemäß der Erfindung wird in einem ersten Verfahrensschritt mittels eines Fehlermodels die Frequenz wenigstens einer fehlerindizierenden Oberschwingung des Motorstroms bestimmt. Das Fehlermodell kann in der Pumpe hinterlegt sein. Durch diesen Schritt werden demzufolge ein oder mehrere spezifische Frequenzen im Motorstrom ermittelt, durch deren Beobachtung im laufenden Pumpenbetrieb eine Fehlererkennung möglich ist. Insbesondere das Auftreten der Oberschwingung oder deren wahrnehmbare Änderung kann für einen spezifischen Fehlerfall charakteristisch sein. Von Bedeutung können bspw. Frequenzen in den Seitenbändern des Stromspektrums sein. Mögliche Fehlerfälle, die sich aus den Eigenschaften wenigstens einer Oberschwingung des Stroms ableiten lassen, sind mechanische Fehlerfälle, wie ein Lagerverschleiß der Pumpe oder des Motors sowie etwaige Laufradfehler. Dazu gehört ebenfalls ein Verstopfen des Laufrades durch anhaftende Festkörper des Fördermediums. Auch ist die Erkennung gewisser Betriebssituationen, wie ein Trockenlauf der Pumpe, möglich.

In einem weiteren Verfahrensschritt soll die Amplitude der Oberschwingung des Motorstroms für die zuvor bestimmte wenigstens eine Fehlerfrequenz ermittelt werden.

Hierfür wird die Transformation des mehrphasigen, insbesondere dreiphasigen Motorstroms in ein zweiachsiges d-q-Stromkoordinatensystem vorgeschlagen. Das resultierende Stromkoordinatensystem rotiert mit der Fehlerfrequenz der fehlerindizierenden Oberschwingung bzw. der entsprechenden Winkelgeschwindigkeit. Der sich dadurch ergebene Stromvektor im d-q-Koordinatensystem setzt sich demzufolge aus einem rotierenden Stromvektor sowie einem stationären Stromvektor zusammen. Letzterer entspricht dem auf die Oberschwingung entfallenden Anteil des Motorstroms, der in der gewählten Darstellung zeitlich konstant ist und somit einen Gleichanteil der Ströme i_{d} und i_{q} bildet. In der Koordinatendarstellung kann durch die Berechnung der geometrischen Summe dieser Gleichanteile die Amplitude der fehlerindizierenden Oberschwingung ermittelt werden. Die vorgeschlagene Vorgehensweise benötigt deutlich weniger Operationen und Ressourcen als bspw. die Ausführung einer FFT oder DFT und lässt sich dadurch aufgrund der vergleichsweise geringen Ressourcenanforderungen problemlos auf einer internen Mikroprozessoreinheit einer Pumpe implementieren. So lässt sich die Lösung vollständig softwarebasiert auf einer bestehenden Mikroprozessoreinheit zur Regelung einer Kreiselpumpe implementieren. Ohnehin bestehende Sensoren für die Strommessung der Motorströme können verwendet werden, eine zusätzliche Hardwareerweiterung ist nicht erforderlich.

Gemäß einer vorteilhaften Ausführungsform wird die wenigstens eine Fehlerfrequenz in Abhängigkeit der Statorfrequenz des Antriebsmotors und/oder der Anzahl der Polpaare des Stators berechnet. Besonders bevorzugt wird die Fehlerfrequenz durch Auflösen der folgenden Formel ${f}_{r , pump} = \left(1\pm \frac{1}{p}\left(1-s\right)\right) ⋅ {f}_{s}$ erhalten, wobei *p* die Anzahl an Polpaaren des Stators darstellt, *s* der Schlupf des verwendeten Antriebsmotors und *fₛ* die Statorfrequenz ist. Prinzipiell ist der Schlupf *s* nur bei Asynchronmotoren von Bedeutung, Für Synchronmotoren ist der Schlupf hingegen *s* = 0.

Wie bereits vorstehend erläutert wurde, stellen die Gleichanteile der Ströme i_{d} und i_{q}, die mittels Transformation bestimmt werden, die notwendige Information für die Ermittlung der Oberschwingungsamplitude zur Verfügung. Eine einfache Vorgehensweise zur Bestimmung dieser Gleichstromanteile ist die Anwendung eines Tiefpassfilters, wodurch der zeitvariable Wechselanteil der entsprechenden Ströme i_{d}, i_{q} herausgefiltert wird. Idealerweise wird ein Tiefpassfilter erster Ordnung verwendet. Besonders bevorzugt kommt ein Butterworth-Filter erster Ordnung zur Anwendung dessen Transferfunktion gemäß $H \left(z\right) = \frac{1 - {e}^{{ω}_{c} T}}{z - {e}^{{ω}_{c} T}}$ definiert sein kann, wobei *T* vorzugsweise der Abtastrate der Prozessoreinheit entspricht. Die Grenzfrequenz *ω_{c}* muss relativ klein gewählt werden, um die Schwingung so weit wie möglich zu entfernen.

Gemäß einer vorteilhaften Ausführungsform der Erfindung wird zur Transformation der Motorströme in das d-q-Stromkoordinatensystem die Parktransformation angewendet, insbesondere gemäß der Formel ${{\vec{l}}_{¯}}_{dq} = {{\vec{l}}_{¯}}_{αβ} ⋅ {e}^{- i \left({ω}_{F}t\right)} ,$ wobei ${\vec{{l}_{¯}}}_{αβ}$ eine Raumzeigerdarstellung des dreiphasigen Motorstroms in einem Statorkoordinatensystem und *ω_{F}* die der fehlerindizierenden Schwingungsfrequenz entsprechende Winkelgeschwindigkeit gemäß *ω_{F} =* 2*πf_{r,pump}* ist. Erforderliche trigonometrische Funktionen für die Anwendung der Park-Transformation können innerhalb der Mikroprozessoreinheit durch Look-Up-Tabellen mit einer definierten Anzahl an Wertepaaren realisiert sein, um den Speicherbedarf der Mikroprozessoreinheit zu minimieren. Denkbar ist die Verwendung von 300 bis 400 Wertepaaren, insbesondere 360 Wertepaaren.

Die vorgenannte Parktransformation wird oftmals auch bei einer feldorientierten (FOC) Drehzahlregelung eines Elektromotors angewendet, wobei dort die Ermittlung des i_{q}-Stromkoordinatensystems nicht in Abhängigkeit einer spezifischen Frequenz einer Oberschwingung erfolgt, sondern stattdessen in Abhängigkeit der aktuellen Rotordrehzahl, sodass sich ein im Hinblick auf den Rotor stationäres Koordinatensystem ergibt. Ist dies der Fall, kann das erfindungsgemäße Verfahren bereits auf einen bestehenden Regelbaustein der Pumpe für die FOC zurückgreifen.

Da die Parktransformation eine Raumzeigerdarstellung des dreiphasigen Motorstroms voraussetzt, muss der dreiphasige Motorstrom zunächst in eine zweidimensionale Raumzeigerdarstellung überführt werden. Dies kann per Transformation in ein Stator-Koordinatensystem mittels Clarke-Transformation geschehen. Auch hier kann theoretisch ein bereits bestehender Regelungsbaustein der Pumpenregelung wiederverwendet werden oder es wird stattdessen nur die Information über die Raumzeigerdarstellung aus dem Regelungsbaustein abgegriffen.

In der Praxis sind Kreiselpumpen, insbesondere Umwälzpumpen, oftmals druckgeregelt. Dies hat zur Folge, dass sich bei Lastvariation auch die Drehzahl der Pumpe während des Betriebs ändern kann. Gleiches gilt entsprechend für die Motorstromaufnahme. Um dies zu berücksichtigen, ist es vorteilhaft, wenn aus der berechneten Schwingungsamplitude ein lastunabhängiger Schadensfaktor abgeleitet wird, sodass dieser betriebspunktunabhängig gegen einen Referenzwert vergleichbar ist. Denkbar ist es beispielsweise, dass die Berechnung eines lastunabhängigen Schadensfaktors durch Bildung des Verhältnisses zwischen der Oberschwingungsamplitude und der Amplitude der drehmomenterzeugenden Komponente des Motorstroms, insbesondere der Amplitude des Motorstroms i_{q}, erfolgt. Der resultierende Schadensfaktor ist damit normiert und unabhängig von der aktuellen Stromaufnahme des Motors.

In einer vorteilhaften Erweiterung des Verfahrens kann nach der abgeschlossenen Berechnung der Oberschwingungsamplitude und/oder des Schadensfaktors ein Abgleich gegen einen Referenzwert oder einen Grenzwert erfolgen. Denkbar ist auch die Überprüfung, ob der berechnete Wert innerhalb eines zulässigen Werteintervalls liegt. Diese Prüfung kann die Pumpe kontinuierlich, periodisch oder zu ausgewählten Zeitpunkten während des laufenden Pumpenbetriebs ausführen. Wird eine Abweichung vom Referenzwert, eine Über- oder Unterschreitung des Grenzwertes oder ein Herausfallen aus dem zulässigen Intervall festgestellt, wird auf eine Anomalität bzw. einen Fehlerfall der Pumpe geschlossen. Das Verfahren kann die Ausgabe einer Fehlermeldung oder gar den Eingriff in die reguläre Pumpensteuerung bzw. - regelung veranlassen, um etwaige Folgeschäden zu vermeiden.

Gemäß einer weiteren vorteilhaften Ausführung der Erfindung kann zu dem vorgesehen sein, dass eine externe, zentrale Auswertungseinheit vorgesehen ist, die mit zwei oder mehreren Kreiselpumpen mittelbar oder unmittelbar in Kommunikation steht. In diesem Fall ist es sinnvoll, wenn die von den jeweiligen Kreiselpumpen individuell berechneten Werte für die Oberschwingungsamplitude und/oder den Schadensfaktor an die zentrale Auswertungseinheit zum Zweck der Fehlererkennung und Fehlerüberwachung übermittelt werden. Damit überwachen die Kreiselpumpen die berechneten Werte nicht selbstständig, sondern übermitteln diese stattdessen an eine zentrale Auswertungseinheit. Diese Vorgehensweise hat den Vorteil, dass eine externe Auswertungseinheit eine Vielzahl von möglichen Schadensfaktorwerten bzw. Oberschwingungsamplitudenwerten sammeln und diese gegeneinander abgleichen kann. Dadurch lassen sich Wertausreißer aus einer Vielzahl vergleichbarer Pumpentypen ermitteln. Die vergleichbaren Pumpentypen sind bspw. gleicher oder ähnlicher Bauart und zeichnen sich ebenfalls durch einen ähnlichen Anwendungsfall aus. Auch liegen die Betriebsparameter der vergleichbaren Pumpen innerhalb definierter Wertebereiche. Betriebsparameter umfassen bspw. den Betriebspunkt, die Drehzahl, etwaige Temperaturwerte des Fördermediums, die Laufzeit bzw. das Alter der Pumpe. Entsprechend ist also vorgesehen, dass neben dem Abgleich der gesammelten Werte für die Oberschwingungsamplitude und/oder den Schadensfaktor auch Betriebsparameter und/oder Eigenschaften der bereitstellenden Kreiselpumpen berücksichtigt werden.

Wie bereits vorstehend beschrieben wurde, ist die Auswertungseinheit als externe Entität ausgestaltet. Sinnvollerweise kann diese als cloudbasierte Lösung umgesetzt sein. Die Kommunikation mit den Kreiselpumpen kann über eine dedizierte Schnittstelle erfolgen. Denkbar ist jedoch ebenso, auf eine bestehende Kommunikationsinfrastruktur und Technologie zurückzugreifen, beispielsweise durch Erweiterung einer Pumpe mit einem entsprechenden Gateway, das die Daten über bestehende Kommunikationstechnologien an die Auswertungseinheit überträgt.

Neben dem erfindungsgemäßen Verfahren bezieht sich die Anmeldung auch auf eine Pumpe, bevorzugt Kreiselpumpe und insbesondere eine Umwälzpumpe, deren Hydraulikeinheit durch einen dreiphasigen Antriebsmotor, insbesondere Permanentmagnet-Synchronmotor, angetrieben wird. Die Kreiselpumpe umfasst weiterhin eine Mikroprozessoreinheit, die konfiguriert ist, das Verfahren gemäß der Erfindung auszuführen. Ebenso kann die Kreiselpumpe ein etwaiges Kommunikationsmodul aufweisen oder mit diesem in Verbindung stehen, um berechnete Oberschwingungsamplitudenwerte und/oder Schadensfaktorwerte an eine externe Auswertungseinheit übertragen zu können. Die Mikroprozessoreinheit übernimmt vorzugsweise die reguläre Drehzahlregelung der Pumpe, insbesondere auf Grundlage einer feldorientierten Regelung.

Neben der erfindungsgemäßen Kreiselpumpe betrifft die Erfindung noch ein übergeordnetes System bestehend aus zwei oder mehreren Kreiselpumpen sowie eine externe Auswertungseinheit, die kommunikativ mit den wenigstens zwei Kreiselpumpen in Verbindung steht. Dabei führen die Kreiselpumpen das entsprechende Verfahren zur Berechnung der Oberschwingungsamplitude bzw. eines Schadensfaktors aus, wobei diese an die externe Auswertungseinheit übertragen werden. Letztere vergleicht die empfangenen Werte miteinander, um fehlerhafte Pumpen aus den übermittelten Datensätzen ermitteln zu können.

Weitere Vorteile und Eigenschaften der Erfindung sollen nachfolgend anhand von Ausführungsbeispielen näher erläutert werden. Es zeigen:
- Figur 1a, 1b, 1c:: unterschiedliche Strom-Spektrumsdiagramme zur Visualisierung der fehlerindizierenden Oberschwingungsfrequenzen,
- Figur 2:: eine Gegenüberstellung des stationären Stator-Koordinatensystems sowie des rotierenden d-q-Koordinatensystems,
- Figur 3:: eine Darstellung des mit der Fehlerfrequenz rotierenden d-q-Koordinatensystems für die Fehleranalyse,
- Figur 4:: eine Blockdarstellung zur Verdeutlichung der einzelnen Verfahrensschritte zur Fehlerüberwachung und
- Figur 5:: ein Systemschaubild des erfindungsgemäßen Systems.

Die Erfindung beschäftigt sich mit einem hinsichtlich des Speicheraufwands und der Anzahl der auszuführenden Operationsschritte optimierten Verfahren zur strombasierten Fehlerüberwachung einer Kreiselpumpe, insbesondere einer Umwälzpumpe. Dem Erfindungsgedanken liegt zunächst die Annahme zu Grunde, dass mechanische Fehler der Pumpe oder des Antriebsmotors gewisse Frequenzen des Stromspektrums beeinflussen.

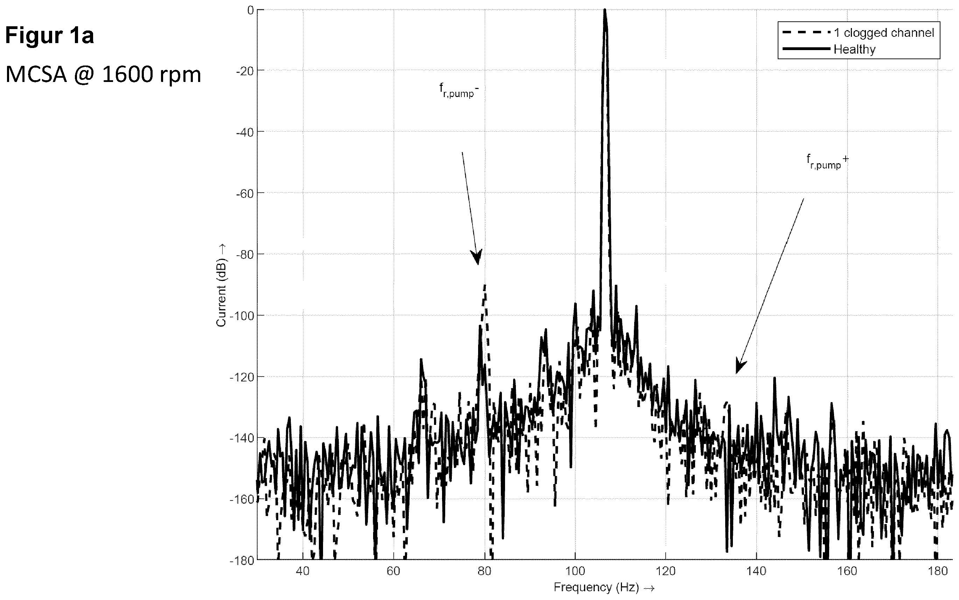

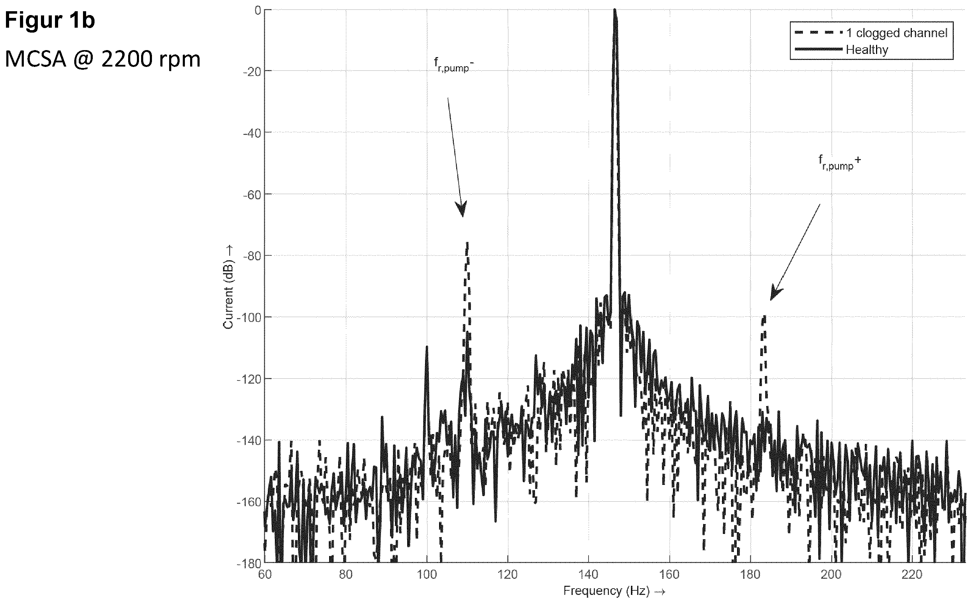

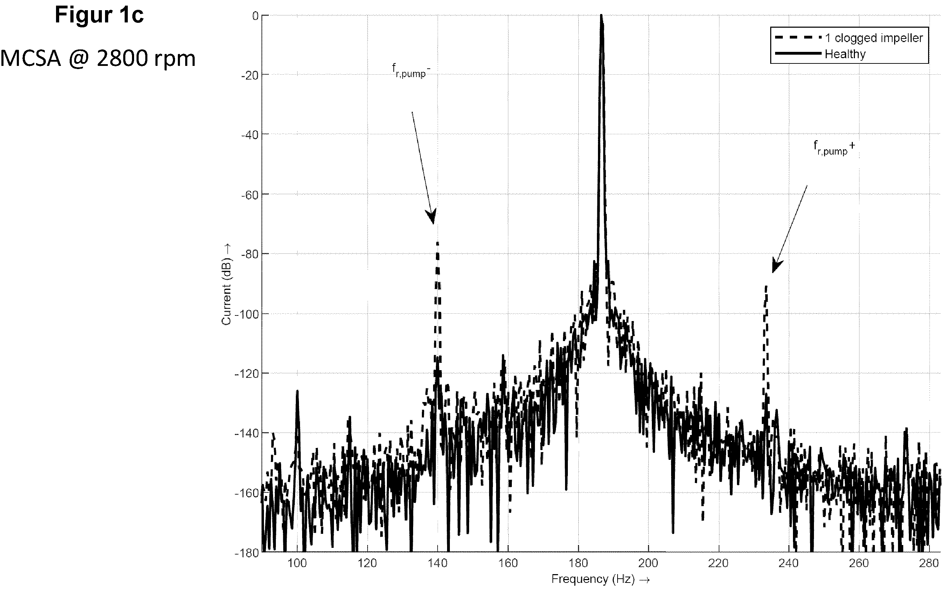

Die Figuren 1a, 1b und 1c zeigen exemplarisch das jeweilige Stromspektrum der gleichen Motorphase bei den Drehzahlen 1600 U/min, 2200 U/min und 2800 U/min einer Heizungsumwälzpumpe mit einem Laufrad mit sieben Kanälen. In der jeweiligen Diagrammdarstellung ist das Stromspektrum sowohl für den fehlerfreien Fall (Kurve mit durchgezogener Linie) als auch für den Fehlerfall (Kurve mit gestrichelter Linie) enthalten, wobei letzterer durch eine künstlich herbeigeführte Verstopfung eines Kanals des Laufrades herbeigeführt wurde. Die jeweiligen Spektren sind in dB dargestellt, wobei die Grundschwingung der dargestellten Motorphase auf 0 dB normiert ist. Die Amplituden der Seitenbänder *f_{r,pump}* +, im Folgenden als oberes Seitenband bezeichnet, und *f_{r,pump}* -, im Folgenden als unteres Seitenband bezeichnet, sind in den Figuren gekennzeichnet.

Bei einer Drehzahl von 1600 U/min (Figur 1a) verursacht der Fehler "Laufradverstopfung" einen Anstieg der Amplitude des unteren Seitenbandes von -103,5 dB im gesunden Zustand auf -90,1 dB im fehlerhaften Zustand. Die Amplitude des oberen Seitenbandes bleibt in etwa gleich. Bei einer Drehzahl von 2200 U/min (Figur 1b) wird der Unterschied zwischen den Stromspektren deutlicher. Die untere Seitenbandamplitude steigt von -104,8 dB auf -75,5 dB und die obere Seitenbandamplitude von -131,0 dB auf -98,8 dB. Das Spektrum bei 2800 U/min sieht ähnlich aus wie das Spektrum von 2200 U/min, aber die Amplituden an den Seitenbändern sind noch stärker ausgeprägt. Die Amplitude des unteren Seitenbandes steigt von -114,8 dB auf -76,0 dB und die des oberen Seitenbandes von -127,1 dB auf -90,9 dB. Die Ergebnisse der obigen Spektrumsanalyse zeigen, dass Informationen über den Zustand der Pumpe im Stromsignal enthalten sind, wobei die Unterschiede zwischen gesund und fehlerhaft mit höherer Drehzahl offensichtlich größer werden.

Für die Fehlerüberwachung sind daher spezifische Frequenzen des Stromspektrums auszuwerten, wobei der im Hinblick auf die Minimierung des Speicheraufwands und der Anzahl der Operationen für die Anwendung bei Umwälzpumpen vielversprechendste Ansatz auf der Multiple Reference Frame-Theorie basiert. Die Idee ist, ähnlich wie bei der Feldorientierten Regelung (FOC), ein Koordinatensystem rotieren zu lassen. Während bei der FOC das Koordinatensystem in der Frequenz des Rotors rotiert, rotiert es im Sinne der Fehlererkennung mit der Frequenz eines Fehlers.

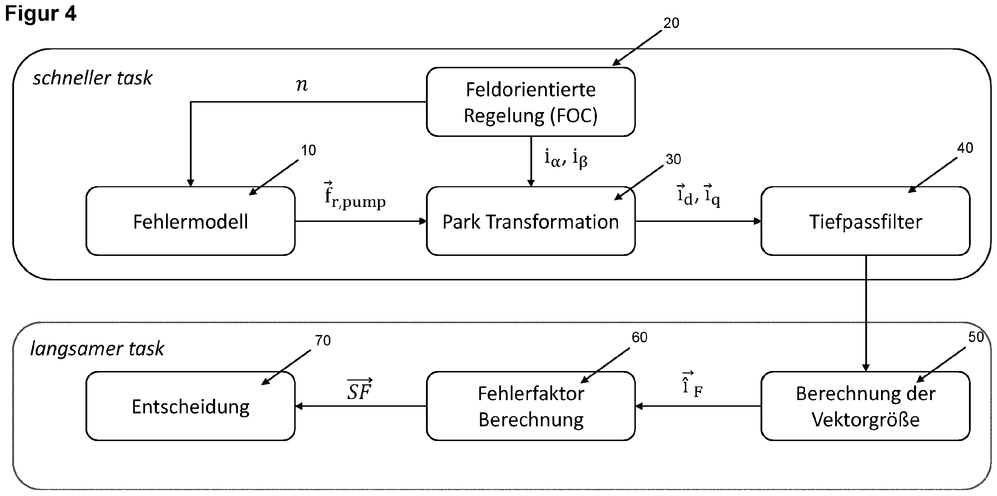

Wie bereits anhand der Figuren 1a, 1b, 1c gezeigt wurde, beeinflussen Unwucht und Ausrichtungsfehler der Mechanik im Hydraulik- als auch Antriebsteil der Pumpe die Amplituden der Seitenbänder des Stromspektrums. Erzeugt kann besagte Unwucht und Ausrichtungsfehler durch ein verstopftes Laufrad, einen Lagerfehler oder auch einen Trockenlauf der Pumpe sein. Der Ablauf des erfindungsgemäßen Verfahrens ist vereinfacht im Blockdiagramm der Figur 4 gezeigt. Die oben erwähnte, relevante Fehlerfrequenz *f_{r,pump}* lässt sich unter Rückgriff auf ein Fehlermodell 10 berechnen, das die Fehlerfrequenz gemäß der Formel (1) in Abhängigkeit der Statorfrequenz (Rotordrehzahl n), des Motorschlupfes s und der Anzahl *p* an Polpaaren des Antriebsmotors berechnet: ${f}_{r , pump} = \left(1\pm \frac{1}{p}\left(1-s\right)\right) ⋅ {f}_{s} .$ (1)

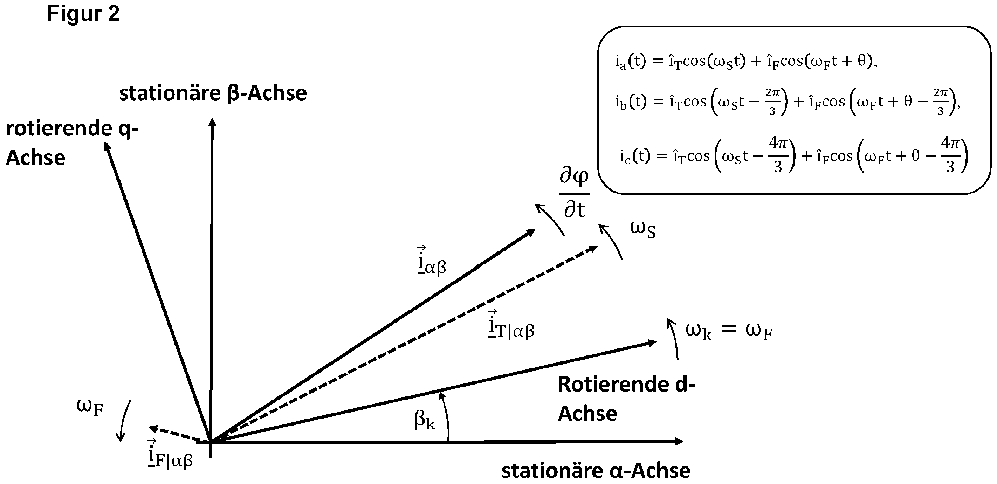

Bei einem Drehstrommotor können die Motorströme in einem Raumvektor zusammengefasst werden. Dazu wird angenommen, dass die Summe der Phasenströme Null ist. Der Realteil des Raumvektors wird mit α-Strom und der Imaginärteil mit β-Strom bezeichnet. Das α-β-Koordinatensystem (siehe Figur 2) wird als statorfestes Koordinatensystem (Stator-Koordinatensystem) bezeichnet. Die Transformation von den dreiphasigen Statorströmen in den zweiphasigen α-β-Strom wird als Clarke-Transformation bezeichnet.

Um einen Wechselstrommotor anzutreiben, wird von einer Pumpenregelung der statorfeste α-β-Strom in den rotorfesten d-q-Strom transformiert, was als Park-Transformation bezeichnet wird. Mathematisch gesehen wird ein Koordinatensystem dazu gebracht, sich entsprechend der Drehzahl n des Rotors zu drehen. Als Ergebnis ist der d-q-Strom ein Gleichstromwert, der für die Motorsteuerung verwendet werden kann. Der interessante Aspekt ist, dass die Vektorsumme aus d- und q-Strom genau der Amplitude der Grundschwingung des Motorstroms entspricht. Dieses Prinzip aus dem Stand der Technik macht sich das erfindungsgemäße Verfahren für die automatisierte Fehlererkennung zu Nutze.

Betrachtet man einen realen Motor, so ist der Phasenstrom und damit der StromRaumvektor mit Schwingungen überlagert, deren Umfang im fehlerhaften Betrieb der Pumpe bzw. des Antriebsmotors zunehmen. Für das erfindungsgemäße Verfahren wird nun angenommen, dass der Motorstrom die Summe aus dem drehmomentbildenden Strom mit der Amplitude *î_{T}* und der Drehzahl *ω_{S}* und einer Oberschwingung mit der Amplitude *î_{F}* und der Drehzahl *ω_{F}* ist. Die Motorströme der drei Phasen lassen sich nach den folgenden Gleichungen (2) berechnen: $\begin{matrix}{i}_{a} \left(t\right) = {\hat{ι}}_{T} cos \left({ω}_{S}t\right) + {\hat{ι}}_{F} cos \left({ω}_{F}t+θ\right) \\ {i}_{b} \left(t\right) = {\hat{ι}}_{T} cos \left({ω}_{S}t-\frac{2 π}{3}\right) + {\hat{ι}}_{F} cos \left({ω}_{F}t+θ-\frac{2 π}{3}\right) \\ {i}_{c} \left(t\right) = {\hat{ι}}_{T} cos \left({ω}_{S}t-\frac{4 π}{3}\right) + {\hat{ι}}_{F} cos \left({ω}_{F}t+θ-\frac{4 π}{3}\right)\end{matrix}$ (2)

In diesem Fall enthält *î_{F}* Informationen über den Zustand der Pumpe und über die Fehlerschwere. Als Beispiel kann *ω_{F}* auf Basis von Gleichung (1) berechnet werden.

Wie in Figur 2 dargestellt, ist der Stromraumvektor ${\vec{{l}_{¯}}}_{αβ}$ im Stator-Koordinatensystem gleich der Summe aus der drehmomentbildenden Komponente ${{\vec{l}}_{¯}}_{\left.T\right| αβ}$*,* die mit der Drehzahl *ω_{S}* rotiert, und der Fehlerkomponente ${{\vec{l}}_{¯}}_{\left.F\right| αβ}$, die mit der Drehzahl *ω_{F}* rotiert. Die Berechnung des Stromraumvektors ${\vec{{l}_{¯}}}_{αβ}$ des dreiphasigen Motorstroms erfolgt gemäß der nachfolgenden Gleichung (3): ${{\vec{l}}_{¯}}_{αβ} = {\hat{ι}}_{T} ⋅ {e}^{i \left({ω}_{S}t\right)} + {\hat{ι}}_{F} ⋅ {e}^{i \left({ω}_{F}t+θ\right)}$ (3)

Im gezeigten Blockdiagramm der Figur 4 wird dieser Schritt bereits durch die vorhandene feldorientierte Regelung 20 der Pumpensteuerung ausgeführt, die als Ausgangsgrößen die beiden Ströme *iₐ* und *i_{β}* liefert.

Im Sinne des erfindungsgemäßen Verfahrens ist die Länge von ${{\vec{l}}_{¯}}_{\left.F\right| αβ}$ von Interesse. Nun wird das d-q-Koordinatensystem mit der Geschwindigkeit der Oberschwingungsfrequenz (*ω_{K} = ω_{F}*) gedreht. Zur Berechnung des Stromvektors in d-q-Koordinaten wird die Standardgleichung für die Park-Transformation verwendet, was im Blockdiagramm durch den Schritt 30 gekennzeichnet ist. Die Park-Transformation lässt sich mathematisch gemäß folgender Gleichung umsetzen: ${\vec{{l}_{¯}}}_{dq} = {\vec{{l}_{¯}}}_{αβ} ⋅ {e}^{- i \left({ω}_{F}t\right)}$ (4)

Wenn die Formel (3) in die Formel (4) eingesetzt wird, ergibt sich Formel (5) für den aktuellen Vektor ${\vec{{l}_{¯}}}_{dq}$ im d-q-Koordinatensystem: ${{\vec{l}}_{¯}}_{dq} = {\hat{ι}}_{F} ⋅ {e}^{iθ} + {\hat{ι}}_{T} ⋅ {e}^{i \left[\left({ω}_{S}-{ω}_{F}\right)t\right]}$ (5)

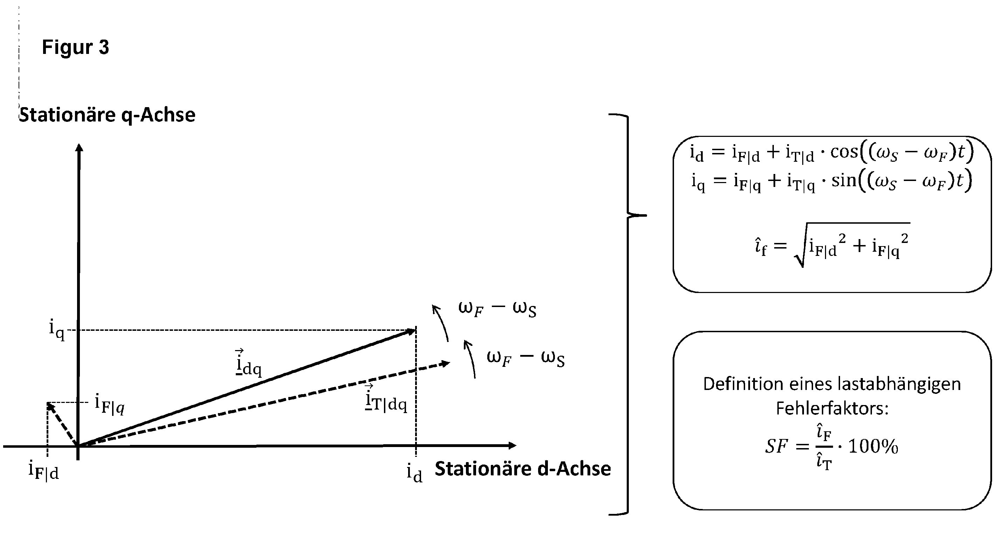

Der Drehstromvektor ${\vec{{l}_{¯}}}_{dq}$ ist gleich der Summe der Vektoren ${{\vec{l}}_{¯}}_{\left.T\right| dq}$, die mit der Geschwindigkeit (*ω_{S} - ω_{F}*) rotieren, und dem stationären Vektor ${{\vec{l}}_{¯}}_{\left.F\right| dq}$, siehe Figur 3. Wenn *ω_{F}* größer als *ω_{S}* ist, drehen sich sowohl ${\vec{{l}_{¯}}}_{dq}$ als auch ${{\vec{l}}_{¯}}_{\left.T\right| dq}$ in die andere Richtung.

Betrachtet man zeitabhängige Größen, bestehen *i_{d}* und *i_{q}* aus einer DC-Komponente und einer AC-Komponente, wie in den Gleichungen (6) und (7) zu sehen ist. ${i}_{d} = {i}_{\left.F\right| d} + {i}_{\left.T\right| d} ⋅ cos \left(\left({ω}_{S}-{ω}_{F}\right)t\right)$ (6) ${i}_{q} = {i}_{\left.F\right| q} + {i}_{\left.T\right| q} ⋅ sin \left(\left({ω}_{S}-{ω}_{F}\right)t\right)$ (7)

Die Anfangsamplitude *î_{f}* kann aus der geometrischen Summe von *i*_{*F*|*d*} und *i*_{*F*|*q*} berechnet werden, siehe nachfolgende Gleichung (8). ${\hat{i}}_{f} = \sqrt{{{i}_{\left.F\right| d}}^{2} + {{i}_{\left.F\right| q}}^{2}}$ (8)

Im Blockschaltbild der Figur 4 ist dieser Verfahrensschritt mit dem Bezugszeichen 50 gekennzeichnet. Wenn die Gleichstromanteile von *i_{d}* und *i_{q}* ermittelt werden, kann die Amplitude *î_{f}* daraus berechnet werden. So kann durch Anwendung einfacher Transformationen die Amplitude einer Harmonischen berechnet werden. Eine einfache und speicherfreundliche Methode zur Berechnung der Gleichstromkomponenten von *i_{d}* und *i_{q}* ist ein Filter erster Ordnung, der im Blockschaltbild der Figur 4 mit dem Bezugszeichen 40 gekennzeichnet ist.

Beispielsweise kann ein Butterworth-Filter erster Ordnung gewählt werden, dessen Übertragungsfunktion wie folgt gemäß Gleichung (9) bestimmt werden kann $H \left(z\right) = \frac{1 - {e}^{{ω}_{c} T}}{z - {e}^{{ω}_{c} T}} ,$ (9) wobei *T* gleich der Abtastzeit der Mikroprozessoreinheit ist. Das Filter erlaubt eine einfache Implementierung. Allerdings muss die Grenzfrequenz *ω_{c}* relativ klein gewählt werden, um die Schwingung so weit wie möglich zu entfernen. Dadurch wird die Zeitkonstante des Filters relativ hoch, was das System langsam macht und in dynamischen Systemen ein Problem darstellen kann. Beim Einsatz in einer Pumpe ist dies jedoch unkritisch, da keine schnellen Lastwechsel zu erwarten sind.

Umwälzpumpen werden in der Regel druckgeregelt betrieben. Dies bedeutet, dass die Last und die Drehzahl der Pumpe sich während des Betriebs ändern können, was gleichzeitig eine Änderung der Stromaufnahme der Pumpe bedeutet. Um dies zu berücksichtigen, wird ein Schadensfaktor ("Severity Factor" SF) für einen Fehler berechnet, der sich auf die Stromaufnahme bezieht. Dargestellt ist dies im Blockschaltbild der Figur 4 mit dem Bezugszeichen 60. Moderne Umwälzpumpen haben eine FOC 10, aus der die Information über die Stromaufnahme gewonnen werden kann. Um die Lastunabhängigkeit zu gewährleisten, wird der Schadensfaktor aus dem Verhältnis des Fehlerindikators *î_{f}* und der Amplitude *î_{T}* der drehmomentbildenden Komponente, die gleich dem q-Strom in der verwendeten FOC ist, gebildet, wobei der d-Strom auf Null geregelt wird: $SF = \frac{{\hat{i}}_{f}}{{\hat{i}}_{T}} ⋅ 100 % .$

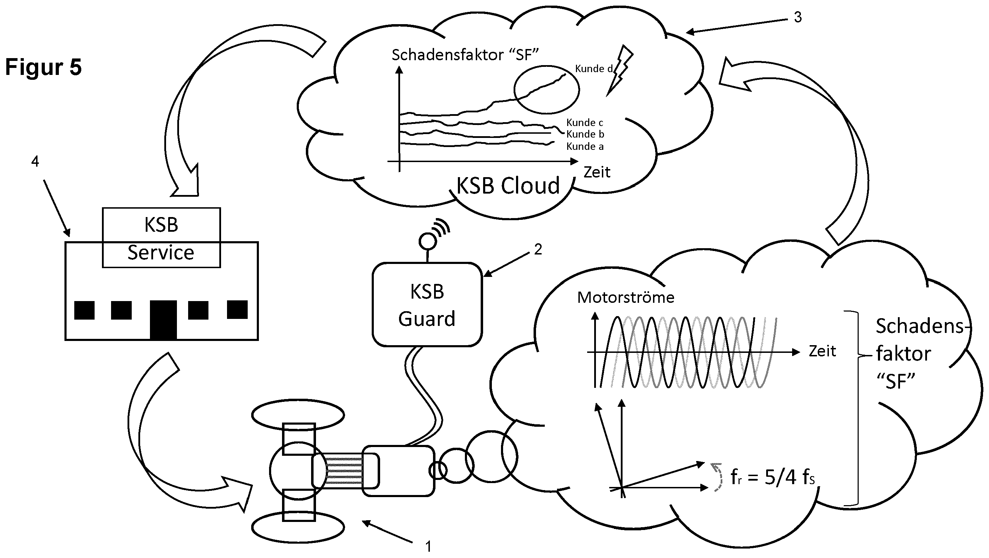

Anhand des Schadensfaktors SF kann dann eine Entscheidung getroffen werden, ob bei der Pumpe ein Fehlerfall vorliegt oder nicht. Die Entscheidung kann lokal durch die Pumpensteuerung getroffen werden, siehe Block 70 der Figur 4. Alternativ kann dazu jedoch auch eine externe Auswertungseinheit eingerichtet werden, die den Schadensfaktor SF von einer Vielzahl von Pumpen erhält. Exemplarisch ist ein solches System in der Figur 5 gezeigt. Die Pumpe 1, hier eine Heizungsumwälzpumpe, berechnet mittels des zuvor vorgestellten Verfahrens den Schadensfaktor SF und übermittelt diesen über ein Gateway 2 an eine externe Auswertungseinheit 3, die vorliegend cloudbasiert implementiert ist. In der Cloud 3 werden die übermittelten Daten, insbesondere der Schadensfaktor sowie weitere Betriebsparameter (bspw. Betriebspunkt, Drehzahl, Temperaturen, Lebensdauer) der Pumpe, mit entsprechenden Daten weiterer Pumpen aus der gleichen Flotte zusammengeführt.

Aufgrund der großen Datenlage einer kompletten Pumpenflotte kann dann ein Vergleich der Schadensfaktoren unter ähnlichen Randbedingungen (Betriebspunkt, Drehzahl, Temperaturen, Lebensdauer) durchgeführt werden. Dies dient zum Herausfiltern von schadhaften Pumpen, sowie dem Erkennen des baldigen Ausfalls von Pumpen. Eine große Abweichung des Schadensfaktors einer Pumpe von den jeweiligen Werten der übrigen Pumpen bzw. einem Mittelwert der übrigen Pumpen kann als Degenerierung bzw. Verstopfung des Laufrades interpretiert werden. In diesem Fall kann der Pumpeninhaber bzw. -betreiber direkt informiert und bei Bedarf ein Service-Mitarbeiter vorbeigeschickt werden: Die Information des Pumpeninhabers bzw. -betreibers und/oder der Service-Auftrag kann bevorzugt durch das System 4 automatisch erfolgen und generiert werden.

## Patentansprüche

1. Verfahren zur Fehlererkennung, insbesondere einer Laufradverstopfung, in einer Pumpe, vorzugsweise Kreiselpumpe (1), mit einem mehrphasigen, insbesondere dreiphasigen Antriebsmotor durch Auswertung wenigstens einer Oberschwingung des Motorstroms mit den Verfahrensschritten:
a. Bestimmen der Fehlerfrequenz *f_{r,pump}* wenigstens einer fehlerindizierenden Oberschwingung des Motorstroms auf Grundlage eines Fehlermodells (10),
b. Berechnen der Oberschwingungsamplitude *î_{f}* des Motorstroms für die wenigstens eine bestimmte Fehlerfrequenz *f_{r,pump}* durch Transformation des dreiphasigen Motorstroms in ein mit der Fehlerfrequenz *f_{r,pump}* rotierendes d-/q-Stromkoordinatensystem mit den Strömen i_{d} und i_{q}, wobei die geometrische Summe der Gleichanteile der Ströme i_{d} und i_{q} im d-/q-Stromkoordinatensystem der Oberschwingungsamplitude *î_{f}* entspricht.

2. Verfahren nach Anspruch 1, **dadurch gekennzeichnet, dass** die wenigstens eine Fehlerfrequenz in Abhängigkeit der Statorfrequenz des Antriebsmotors und der Anzahl der Poolpaare des Stators berechnet wird, insbesondere gemäß ${f}_{r , pump} = \left(1\pm \frac{1}{p}\left(1-s\right)\right) ⋅ {f}_{s}$, wobei *p* die Anzahl an Polpaaren des Stators, *s* der Motorschlupf und *fₛ* die Statorfrequenz sind.

3. Verfahren nach einem der vorstehenden Ansprüche, **dadurch gekennzeichnet, dass** die Gleichanteile der transformierten Ströme i_{d} und i_{q} durch Anwendung eines Tiefpassfilters (40), bevorzugt eines Tiefpassfilters erster Ordnung, besonders bevorzugt eines Butterworth-Filters erster Ordnung, ermittelt werden.

4. Verfahren nach einem der vorstehenden Ansprüche, **dadurch gekennzeichnet, dass** die Transformation in das d-q-Stromkoordinatensystem mittels Park-Transformation (30) erfolgt, insbesondere gemäß ${{\vec{l}}_{¯}}_{dq} = {{\vec{l}}_{¯}}_{αβ} ⋅ {e}^{- i \left({ω}_{F}t\right)} ,$ wobei ${\vec{{l}_{¯}}}_{αβ}$ eine Raumzeigerdarstellung des dreiphasigen Motorstroms in einem Stator-Koordinatensystem ist und die Winkelgeschwindigkeit *ω_{F}* aus der Fehlerfrequenz *f_{r,pump}* gemäß *ω_{F}* = 2*πf_{r,pump}* berechnet wird.

5. Verfahren nach Anspruch 4, **dadurch gekennzeichnet, dass** die Transformation des dreiphasigen Motorstroms in eine Raumzeigerdarstellung in einem Stator-Koordinatensystem durch eine Clark-Transformation erfolgt, wobei der Raumzeiger ${\vec{{l}_{¯}}}_{αβ}$ vorzugsweise durch einen bestehenden Regelungsbaustein der Pumpenregelung bestimmt wird, der eine feldorientierte Drehzahlregelung (20) ausführt.

6. Verfahren nach einem der vorstehenden Ansprüche, **dadurch gekennzeichnet, dass** ein lastunabhängiger Schadensfaktor SF auf Grundlage der Oberschwingungsamplitude *î_{f}* ermittelt wird, insbesondere durch Bildung des Verhältnisses zwischen der Oberschwingungsamplitude *î_{f}* und der Amplitude der drehmomenterzeugenden Komponente des Motorstroms, insbesondere der Amplitude *î_{T}* des Stroms i_{q}.

7. Verfahren nach einem der vorstehenden Ansprüche, **dadurch gekennzeichnet, dass** die Kreiselpumpe (1) die berechnete Oberschwingungsamplitude *î_{f}* und/oder den Schadensfaktor SF während der Laufzeit überwacht und bei Feststellung einer Anomalität des berechneten Wertes eine Fehlermeldung ausgibt und/oder einen Eingriff in die Pumpensteuerung auslöst.

8. Verfahren nach einem der vorstehenden Ansprüche, **dadurch gekennzeichnet, dass** das Verfahren auf einer integralen Mikroprozessoreinheit der Pumpe (1) ausgeführt wird, insbesondere während der Laufzeit der Pumpe.

9. Verfahren nach einem der vorstehenden Ansprüche, **dadurch gekennzeichnet, dass** eine externe, zentrale Auswertungseinheit (3) vorgesehen ist und zwei oder mehrere Kreiselpumpen (1) ihre berechneten Werte für die Oberschwingungsamplitude *î_{f}* und/oder den Schadensfaktor SF an die Auswertungseinheit (3) zum Zwecke der Fehlererkennung übermitteln.

10. Verfahren nach Anspruch 9, **dadurch gekennzeichnet, dass** die zentrale Auswertungseinheit (3) zwei oder mehrere der empfangenen Werte miteinander vergleicht, um Anomalitäten zu erkennen und einen Fehlerfall zu detektieren.

11. Verfahren nach einem der vorstehenden Ansprüche 9 und 10, **dadurch gekennzeichnet, dass** neben den Werten für die Oberschwingungsamplitude *î_{f}* und/oder den Schadensfaktor SF weitere Betriebsparameter der Pumpe (1), bspw.
die Drehzahl n und/oder der Betriebspunkt der Pumpe (1) und/oder ein Temperaturwert und/oder die Lebensdauer bzw. Laufzeit der Pumpe (1), übertragen werden.

12. Verfahren nach Anspruch 11, **dadurch gekennzeichnet, dass** die Auswertungseinheit (3) für den Vergleich der empfangenen Werte nur solche Pumpen (1) heranzieht, deren Betriebsparameter identisch sind oder in einem vordefinierten Bereich liegen.

13. Verfahren nach einem der vorstehenden Ansprüche 9 bis 12, **dadurch gekennzeichnet, dass** die Auswertungseinheit (3) durch eine cloudbasierte Lösung implementiert ist.

14. Verfahren nach einem der vorstehenden Ansprüche, **dadurch gekennzeichnet, dass** die Auswertungseinheit (3) bei einem detektierten Fehlerfall automatisch einen Serviceauftrag (4) für die betroffene Pumpe (1) generiert.

15. Pumpe (1), bevorzugt Kreiselpumpe, besonders bevorzugt Zirkulationspumpe, mit einem mehrphasigen, insbesondere dreiphasigen Antriebsmotor, insbesondere einem Permanentmagnet-Synchronmotor, sowie einer MikroprozessorEinheit, die so konfiguriert ist, das Verfahren gemäß einem der vorstehenden Ansprüche 1 bis 8 auszuführen.

16. System umfassend mindestens zwei Kreiselpumpen (1) gemäß Anspruch 15 und wenigstens eine zentrale Auswertungseinheit (3) mit einem Prozessor, der so konfiguriert ist, dass Verfahren gemäß einem der Ansprüche 9 bis 14 auszuführen.

## Claims

1. Method for identifying a fault, in particular an impeller blockage, in a pump, preferably centrifugal pump (1), having a multi-phase, in particular three-phase, drive motor, by evaluating at least one harmonic of the motor current, having the method steps of:
a. determining the fault frequency f_{r,pump} of at least one fault-indicating harmonic of the motor current on the basis of a fault model (10),
b. calculating the harmonic amplitude î_{ƒ} of the motor current for the at least one determined fault frequency f_{r,pump} by transforming the three-phase motor current into a dq current coordinate system that contains the currents i_{d} and i_{q} and rotates at the fault frequency f_{r,pump}, wherein the geometric sum of the direct components of the currents i_{d} and i_{q} in the dq current coordinate system corresponds to the harmonic amplitude î_{ƒ}.

2. Method according to Claim 1, **characterized in that** the at least one fault frequency is calculated on the basis of the stator frequency of the drive motor and the number of pole pairs of the stator, in particular according to ${f}_{r , pump} = \left(1\pm \frac{1}{p}\left(1-s\right)\right) ⋅ {f}_{s}$, wherein p is the number of pole pairs of the stator, s is the motor slip and fₛ is the stator frequency.

3. Method according to either of the preceding claims, **characterized in that** the direct components of the transformed currents i_{d} and i_{q} are ascertained by using a low-pass filter (40), preferably a first-order low-pass filter, particularly preferably a first-order Butterworth filter.

4. Method according to one of the preceding claims, **characterized in that** the transformation into the dq current coordinate system is performed by means of Park transformation (30), in particular according to ${{\vec{l}}_{¯}}_{dq} = {{\vec{l}}_{¯}}_{αβ} ⋅ {e}^{- i \left({ω}_{F}t\right)} ,$ wherein ${{\vec{l}}_{¯}}_{αβ}$ is a space-vector representation of the three-phase motor current in a stator coordinate system and the angular velocity ω_{F} is calculated from the fault frequency f_{r,pump} according to ω_{F} = 2πf_{r,pump}.

5. Method according to Claim 4, **characterized in that** the transformation of the three-phase motor current into a space-vector representation in a stator coordinate system is performed by a Clarke transformation, wherein the space vector ${{\vec{l}}_{¯}}_{αβ}$ is preferably determined by an existing control element of the pump controller, which control element carries out field-oriented control (20).

6. Method according to one of the preceding claims, **characterized in that** a load-independent severity factor SF is ascertained on the basis of the harmonic amplitude î_{ƒ}, in particular by forming the relationship between the harmonic amplitude î_{ƒ} and the amplitude of the torque-generating component of the motor current, in particular the amplitude î_{T} of the current i_{q}.

7. Method according to one of the preceding claims, **characterized in that** the centrifugal pump (1) monitors the calculated harmonic amplitude î_{ƒ} and/or the severity factor SF during the running time and upon finding an anomaly in the calculated value outputs a fault message and/or triggers an intervention in the pump controller.

8. Method according to one of the preceding claims, **characterized in that** the method is carried out on an integral microprocessor unit of the pump (1), in particular during the running time of the pump.

9. Method according to one of the preceding claims, **characterized in that** an external, central evaluation unit (3) is provided and two or more centrifugal pumps (1) transmit their calculated values for the harmonic amplitude î_{ƒ} and/or the severity factor SF to the evaluation unit (3) for the purpose of identifying a fault.

10. Method according to Claim 9, **characterized in that** the central evaluation unit (3) compares two or more of the received values with one another in order to identify anomalies and to detect a fault.

11. Method according to either of preceding Claims 9 and 10, **characterized in that**, in addition to the values for the harmonic amplitude î_{ƒ} and/or the severity factor SF, further operating parameters of the pump (1), for example the speed n and/or the operating point of the pump (1) and/or a temperature value and/or the service life or running time of the pump (1), are transmitted.

12. Method according to Claim 11, **characterized in that**, for the comparison of the received values, the evaluation unit (3) uses only such pumps (1) the operating parameters of which are identical or are in a predefined range.

13. Method according to one of preceding Claims 9 to 12, **characterized in that** the evaluation unit (3) is implemented by a cloud-based solution.

14. Method according to one of the preceding claims, **characterized in that** the evaluation unit (3) automatically generates a service task (4) for the relevant pump (1) in the event of a fault being detected.

15. Pump (1), preferably centrifugal pump, particularly preferably circulation pump, having a multi-phase, in particular three-phase, drive motor, in particular a permanent magnet synchronous motor, and a microprocessor unit which is configured so as to carry out the method according to one of preceding Claims 1 to 8.

16. System comprising at least two centrifugal pumps (1) according to Claim 15 and at least one central evaluation unit (3) having a processor which is configured so as to carry out the method according to one of Claims 9 to 14.

## Revendications

1. Procédé de reconnaissance de défauts, en particulier d'un colmatage de la roue, dans une pompe, de préférence une pompe centrifuge (1), comprenant un moteur d'entraînement polyphasé, notamment triphasé, par évaluation d'au moins une harmonique du courant de moteur, comprenant les étapes suivantes :
a. détermination de la fréquence de défaut ƒ_{r,pump} d'au moins une harmonique indiquant un défaut du courant de moteur sur la base d'un modèle de défaut (10),
b. calcul de l'amplitude harmonique î_{ƒ} du courant de moteur pour au moins une fréquence de défaut ƒ_{r,pump} déterminée par transformée du courant de moteur triphasé en un système de coordonnées de courant d/q en rotation à la fréquence de défaut ƒ_{r,pump} avec les courants i_{d} et i_{q}, la somme géométrique des composantes continues des courants i_{d} et i_{q} dans le système de coordonnées de courant d/q correspondant à l'amplitude harmonique î_{ƒ}.

2. Procédé selon la revendication 1, **caractérisé en ce que** l'au moins une fréquence de défaut est calculée en fonction de la fréquence statorique du moteur d'entraînement et du nombre de paires de pôles du stator, en particulier selon ${f}_{r , pump} = \left(1\pm \frac{1}{p}\left(1-s\right)\right) ⋅ {f}_{s}$, où p désigne le nombre de paires de pôles du stator, s le glissement du moteur et ƒₛ la fréquence statorique.

3. Procédé selon l'une des revendications précédentes, **caractérisé en ce que** les composantes continues des courants i_{d} et i_{q} transformés sont déterminées en utilisant un filtre passe-bas (40), de préférence un filtre passe-bas du premier ordre, de manière particulièrement préférée un filtre Butterworth du premier ordre.

4. Procédé selon l'une des revendications précédentes, **caractérisé en ce que** la transformée en le système de coordonnées courant d-q s'effectue au moyen d'une transformée de Park (30), en particulier selon ${{\vec{l}}_{¯}}_{dq} = {{\vec{l}}_{¯}}_{αβ} ⋅ {e}^{- i \left({ω}_{F}t\right)} ,$ où ${{\vec{l}}_{¯}}_{αβ}$ est une représentation vectorielle spatiale du courant de moteur triphasé dans un système de coordonnées statoriques et la vitesse angulaire ω_{F} est calculée à partir de la fréquence de défaut ƒ_{r,pump} selon ω_{F} = 2πƒ_{r,pump}.

5. Procédé selon la revendication 4, **caractérisé en ce que** la transformée du courant de moteur triphasé en une représentation vectorielle spatiale dans un système de coordonnées statoriques s'effectue au moyen d'une transformée de Clark, le vecteur spatial ${{\vec{l}}_{¯}}_{αβ}$ étant de préférence déterminé par un module de régulation existant du régulateur de pompe, qui effectue une régulation de vitesse à champ orienté (20).

6. Procédé selon l'une des revendications précédentes, **caractérisé en ce qu'**un facteur de dommage SF indépendant de la charge est déterminé sur la base de l'amplitude harmonique î_{ƒ}, en particulier en formant le rapport entre l'amplitude harmonique î_{ƒ} et l'amplitude de la composante générant le couple du courant de moteur, en particulier l'amplitude î_{T} du courant i_{q}.

7. Procédé selon l'une des revendications précédentes, **caractérisé en ce que** la pompe centrifuge (1) surveille l'amplitude harmonique î_{ƒ} calculée et/ou le facteur de dommage SF pendant la durée de fonctionnement et délivre un message d'erreur et/ou déclenche une intervention dans la commande de pompe en cas de constatation d'une anomalie de la valeur calculée.

8. Procédé selon l'une des revendications précédentes, **caractérisé en ce que** le procédé est mis en œuvre sur une unité à microprocesseur intégrée de la pompe (1), en particulier pendant la durée de fonctionnement de la pompe.

9. Procédé selon l'une des revendications précédentes, **caractérisé en ce qu'**une unité d'évaluation (3) centrale externe est prévue et deux pompes centrifuges (1) ou plus communiquent leurs valeurs calculées pour l'amplitude harmonique î_{ƒ} et/ou le facteur de dommage SF à l'unité d'évaluation (3) à des fins de reconnaissance de défaut.

10. Procédé selon la revendication 9, **caractérisé en ce que** l'unité d'évaluation (3) centrale compare entre elles deux ou plus des valeurs reçues afin de reconnaître des anomalies et détecter un cas de défaut.

11. Procédé selon l'une des revendications 9 ou 10 précédentes, **caractérisé en ce que**, en plus des valeurs de l'amplitude harmonique î_{ƒ} et/ou du facteur de dommage SF, des paramètres de fonctionnement supplémentaires de la pompe (1), par exemple la vitesse de rotation n et/ou le point de fonctionnement de la pompe (1) et/ou une valeur de température et/ou la durée de vie ou la durée de fonctionnement de la pompe (1) sont transmis.

12. Procédé selon la revendication 11, **caractérisé en ce que** l'unité d'évaluation (3), pour la comparaison des valeurs reçues, utilise uniquement des pompes (1) dont les paramètres de fonctionnement sont identiques ou se situent dans une plage prédéfinie.

13. Procédé selon l'une des revendications 9 à 12 précédentes, **caractérisé en ce que** l'unité d'évaluation (3) est mise en œuvre par une solution basée en nuage.

14. Procédé selon l'une des revendications précédentes, **caractérisé en ce que** l'unité d'évaluation (3) génère automatiquement un ordre de service (4) pour la pompe (1) concernée en cas de défaut détecté.

15. Pompe (1), de préférence pompe centrifuge, notamment de préférence pompe de circulation, comprenant un moteur d'entraînement polyphasé, en particulier triphasé, en particulier un moteur synchrone à aimants permanents, ainsi qu'une unité à microprocesseur qui est configurée pour mettre en œuvre le procédé selon l'une des revendications 1 à 8 précédentes.

16. Système comprenant au moins deux pompes centrifuges (1) selon la revendication 15 et au moins une unité d'évaluation (3) centrale dotée d'un processeur, lequel est configuré pour mettre en œuvre le procédé selon l'une des revendications 9 à 14.
